# EUROPEAN PATENT APPLICATION

(11) **EP 2 696 275 A2**
(43) Date of publication of application: **12.02.2014**
(21) Application number: 13154853.9
(22) Date of filing: 11.02.2013
(51) Int. Cl.: G06F 3/06

(54) **I/o device and storage management system**

(30) Priority: 07.08.2012 US 201213568419
(71) Applicant: Hitachi Ltd., Tokyo 100-8280 (JP)
(72) Inventor: Haga, Futoshi, Chiyoda-ku, Tokyo 100-8220 (JP)
(74) Representative: Moore, Graeme Patrick

(57) **Abstract**

An input/output (I/O) device includes at least one communication port; at least one storage device attached to the I/O device and is configured to provide a storage volume; and an I/O manager configured to manage operations of the I/O device. The I/O manager is configured to receive a request to create a new logical volume, create a new logical volume on the storage device based on the request, and define a first relationship between the created logical volume and a virtual I/O instance based on the request. The virtual I/O instance is a virtual access point for enabling a computer system connected to the I/O device via the communication port to access the created logical volume.

## Description

### BACKGROUND OF THE INVENTION

The present invention relates to an I/O device and storage volume management systems for server systems.

Many companies have embraced the virtual machine environment in recent years. Its usage allows physical machines, e.g., servers, to be consolidated into fewer machines and thereby reduce hardware cost. Some estimates that companies often manage more virtual machines than actual physical machines. The number of virtualized physical servers, i.e., physical servers that run virtual machine environment, is expected to increase even more in coming years. The cost of information technology (IT) platform management has been rising with the greater adoption of virtual machine environment since the management of virtual machines tends to be more complicated than physical machines. This is particularly true in a storage converged system that integrates server, storage and network management. One component or device that is often used in a storage converged system is an I/O device (or I/O module) that consolidates virtualized network and storage connectivity to service a plurality of computer systems. The I/O module virtualizes server I/O resources. One type of I/O module is a PCI-based I/O box that uses SSD Flash cards.

The I/O modules may be deployed in an information system including a conventional storage system. A storage system typically includes one or more storage arrays that are connected to a plurality of hosts via a fabric network including a storage network and a LAN. One type of commonly used storage networks is Storage Area Network (SAN). In such an information system, an I/O module administrator is employed to manage the I/O modules, and a SAN administrator is employed to manage the storage system. Both of these administrators are needed to manage volumes, e.g., create volumes, for computer systems (or hosts or server) in the information system. The I/O module administrator creates vI/O instances and logical volumes on a PCI-based SSD device, maps the vI/O instances to the logical volumes, and configures the I/O switch to connect the vI/O instances to the computer systems. The SAN administer has to associate corresponding logical volumes and perform the LUN masking to deploy the newly created logical volumes in PCI-SSD in the information system. The current method of managing an information system having I/O modules and storage system is cumbersome and inefficient. It would be desirable to streamline the management of such an information system.

### BRIEF SUMMARY OF THE INVENTION

The present invention relates to an I/O device and storage volume management systems for server systems. In an embodiment, a plurality of the I/O devices (or I/O modules) is deployed as part of an information system. The I/O modules are used to provide input/output virtualization (IOV), so that a single physical I/O unit may be shared by more than one system image. The I/O modules in the information system are managed using SAN operation methods. For example, SAN operation methods are used to perform the volume management, copy management, migration management, and pool management.

In an embodiment, a vI/O manager in the I/O module is used to manage the storage devices attached to the I/O module by using SAN operation methods. The I/O module may be a PCI-based I/O box, and the storage devices may be SSD Flash cards.

In an embodiment, an input/output (I/O) device includes at least one communication port; at least one storage device attached to the I/O device and is configured to provide a storage volume; and an I/O manager configured to manage operations of the I/O device. The I/O manager is configured to receive a request to create a new logical volume, create a new logical volume on the storage device based on the request, and define a first relationship between the created logical volume and a virtual I/O instance based on the request. The virtual I/O instance is a virtual access point for enabling a computer system connected to the I/O device via the communication port to access the created logical volume.

In an embodiment, an input/output (I/O) manager is stored in an I/O device having at least one communication port and at least one storage device. The I/O manager is configured to receive a request to create a new logical volume, create a new logical volume on the storage device based on the request, and define a first relationship between the created logical volume and a virtual I/O instance based on the request. The virtual I/O instance is a virtual access point for enabling a computer system connected to the I/O device via the communication port to access the created logical volume.

In another embodiment, a method for managing an input/output device having a communication port and at least one storage device is disclosed. The method includes receiving a request to create a new logical volume; creating a new logical volume on the storage device based on the request; and defining a first relationship between the created logical volume and a virtual I/O instance based on the request, the virtual I/O instance being a virtual access point for enabling a computer system connected to the I/O device via the communication port to access the created logical volume.

### BRIEF DESCRIPTION OF THE DRAWINGS

Figure 1 illustrates an information system having a plurality of computer systems (or hosts), a plurality of I/O modules, and a plurality of storage devices according to an embodiment of the present invention

Figure 2 illustrates a vI/O manager according to an embodiment of the present invention.

Figure 3 illustrates a storage device management table managed by vI/O manager 116 according to an embodiment of the present invention.

Figure 4 illustrates a logical volume and virtual I/O mapping table managed by vI/O manager 116 according to an embodiment of the present invention.

Figure 5 illustrates a virtual I/O management table managed by vI/O manager according to an embodiment of the present invention.

Figure 6 illustrates a copy group management table managed by vI/O manager according to an embodiment of the present invention.

Figure 7 illustrates a pool group management table managed by vI/O manager according to an embodiment of the present invention.

Figure 8 illustrates a process for creating a logical volume on storage device according to an embodiment of the present invention.

Figure 9 illustrates a process for LUN masking according to an embodiment of the present invention.

Figure 10 illustrates a process for deleting a logical volume according to an embodiment of the present invention.

Figure 11 illustrates a process for adding a copy group according to an embodiment of the present invention.

Figure 12 illustrates an information system including a copy group according to an embodiment of the present invention.

Figure 13 illustrates a process for adding a logical volume to a copy group according to an embodiment of the present invention.

Figure 14 illustrates a process for removing a logical volume from a copy group according to an embodiment of the present invention.

Figure 15 illustrates a process for deleting a copy group according to an embodiment of the present invention.

Figure 16 illustrates a process for creating a pool group according to an embodiment of the present invention

Figure 17 illustrates an information system including a pool group according to an embodiment of the present invention.

Figure 18 illustrates a process for migrating a logical volume from a first storage device coupled to an I/O module to a second storage device coupled to the I/O module according to an embodiment of the present invention

Figure 19 illustrates a process for migrating data from a source volume within a computer system to a destination volume in a storage device according to an embodiment of the present invention.

Figure 20 illustrates a configuration of an information system during a volume migration according to an embodiment of the present invention.

### DETAILED DESCRIPTION OF THE INVENTION

The present invention relates to an I/O device and storage volume management systems for server systems. In an embodiment, a plurality of the I/O devices (or I/O modules) is deployed as part of an information system. The I/O modules are used to provide input/output virtualization (IOV), so that a single physical I/O unit may be shared by more than one system image. The I/O modules in the information system are managed using SAN operation methods. For example, SAN operation methods are used to perform the volume management, copy management, migration management, and pool management.

In an embodiment, a vI/O manager in the I/O module is used to manage the storage devices attached to the I/O module by using SAN operation methods. The I/O module may be a PCI-based I/O box, and the storage devices may be SSD Flash cards.

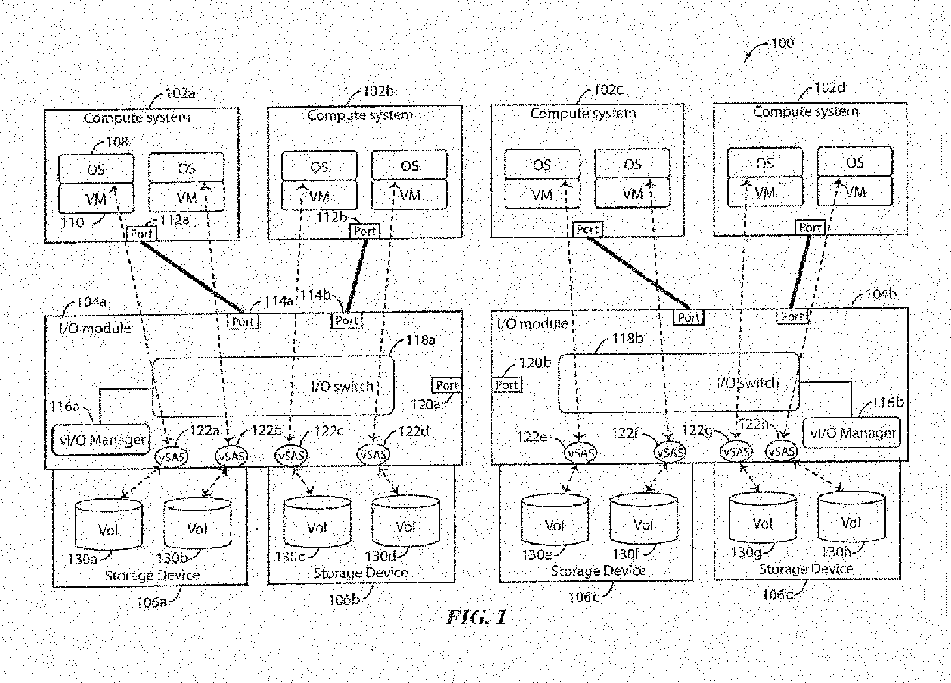

Fig. 1 illustrates an information system 100 having a plurality of computer systems (or hosts) 102a-102d, a plurality of I/O modules 104a, 104b, and a plurality of storage devices 106a-106d according to an embodiment of the present invention. In an embodiment, information system 100 is provided in a multi-root I/O virtualization environment where multiple views of a given device is exported and managed in a PCI-based (e.g., PCIe) fabric that can be connected to more than one root port.

Each computer system 102 includes one or more operating systems (OS) 108, one or more virtual machines (VMs) 110, and one or more ports 112. Computer system 102 may be a personal computer, a server, a mainframe, a handheld computer, or any other computer system capable of running an operating system 108 and a virtual machine 110. Computer 102 also includes computer readable medium (not shown) that are configured to store information. Examples of such a computer readable medium includes a hard disk drive (HDD), a solid state drive (SSD), DRAM, ROM, Flash memory, and others.

In an embodiment, VM 110 is a software implementation of a computer that executes programs like a physical machine. Each VM 110 is assigned with specific virtual and physical devices that it can use to execute one or more programs. Port 112 is coupled to I/O module 104.

The term "port" as used herein may be a software construct serving as a communication endpoint or a hardwired interface such as a Peripheral Controller Interface (PCI), an Ethernet port, a Universal Serial Bus (USB), a Serial Advanced Technology Attachment (SATA), a fiber optic port, or a wireless transceiver.

I/O module 104 is a server that virtualizes I/O resources. In an embodiment, I/O module 104 is a PCI-based I/O box or I/O device. I/O module 104 may also be a blade server according to implementation. A typical blade server houses a plurality of blades in which processors, memories, and network interface cards/controllers (or NICs) are mounted.

I/O module 104 includes a plurality of communication ports 114 that are coupled to the ports 112 of computer systems 102. In an embodiment, each port 114 of the I/O module is uniquely paired to a port of a computer system, e.g., port 114a is a dedicated to port 112a and port 114b is dedicated to port 112b.

I/O module 104 also includes a virtual I/O (vI/O) manager 116, an I/O switch 118,a a port 120, and a plurality of virtual I/O instances 122. Specifically, I/O module 104a includes virtual I/O (vI/O) manager 116a, I/O switch 118a, port 120a and virtual I/O a plurality of instances 122a-122d. I/O module 104b includes virtual I/O (vI/O) manager 116b, I/O switch 118b, port 120b and a plurality of virtual I/O instances 122e-122h. The virtual I/O instances are virtual access points for enabling computer system 102 to access storage resources of the I/O module, e.g., a virtual instance of Serial Attached Small Computer System Interface (or vSAS). For example, the number of v I/O instances is equal to the number of logical volumes managed by the I/O manager 116.

vI/O manager (or I/O manager) 116 manages operations of an I/O module 104, including the connectivity configuration of I/O switch 118. As will be explained below, vI/O manager 116 is configured to enable a SAN administrator to manage I/O module 104 and the storage devices attached thereto using SAN operation methods, thereby simplifying the management of I/O module 104.

In an embodiment, each I/O module 104 includes a vI/O manager 116 which communicates with other vI/O managers through port 120. In information system 100 having a plurality of I/O modules 104, one of the vI/O managers may be designated as a master, and other vI/O managers may be designated as slaves. The master vI/O manager can centrally manage operations of the plurality of I/O modules 104, including connectivity between all of the various computer systems 102 and the various peripheral components. vI/O manager 116 may be embodied as a software module on a computer readable medium such as dynamic random access memory (DRAM), or a non-volatile memory device such as flash memory or erasable programmable read only memory (EPROM).

I/O switch 118 connects the vI/O instances 122 to appropriate ports 114 according to instructions of vI/O manager 116, thereby coupling vI/O instances 122 to appropriate computer systems 102 via ports 112. vI/O instances 122, in turn, are mapped to storage volumes 130 in storage devices 106 and enable computer systems 102 to access the storage volumes in storage devices 106.

Storage devices 106a-106d include storage volumes 130a-130h. In an embodiment, storage devices 106 are SSD Flash cards that are attached to I/O module 104 and storage volumes 130a-130h are defined on SSD. Storage devices 106 may be other types of storage media according to implementation. The storage devices are configured to create logical volumes and vI/O instances to provide storage volumes to computer systems 102. The vI/O instances are access end points of storage connection protocol like SCSI, Fibre Channel (FC), or the like, for computer systems 102. In an embodiment, vI/O instance is a virtual function of PCI device, such as a virtual instance of Serial Attached SCSI (vSAS) or virtual instance of Host Bus Adapter (vHBA), virtual instance of Network Interface Controller (vNIC) or the like. Storage devices 106 may have predefined vI/O instances on its firmware, or may be defined by vI/O manager 116 using PCI protocols.

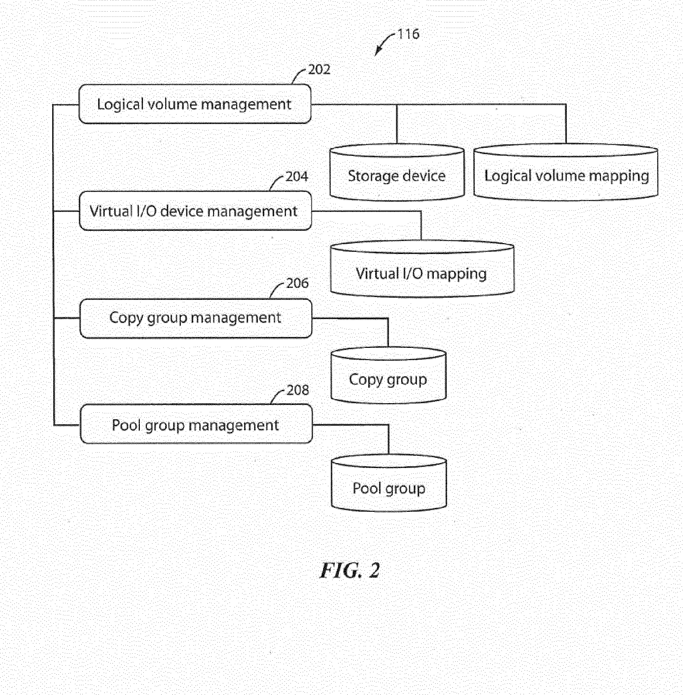

Figure 2 illustrates a vI/O manager 116 according to an embodiment of the present invention. vI/O manager (or I/O manager) 116 includes a logical volume management module 202, a virtual I/O device management module 204, a copy group management module 206, and a pool group management module 208. Logical volume management module 202 has storage device information and logical volume mapping. Virtual I/O device management module 204 is configured to manage vI/O instances and include information on virtual I/O mapping. Copy group management module 206 is configured to manage copy groups distributed among one or more storage devices 106. Pool group management module 208 is configured to manage pool groups within the information system 100.

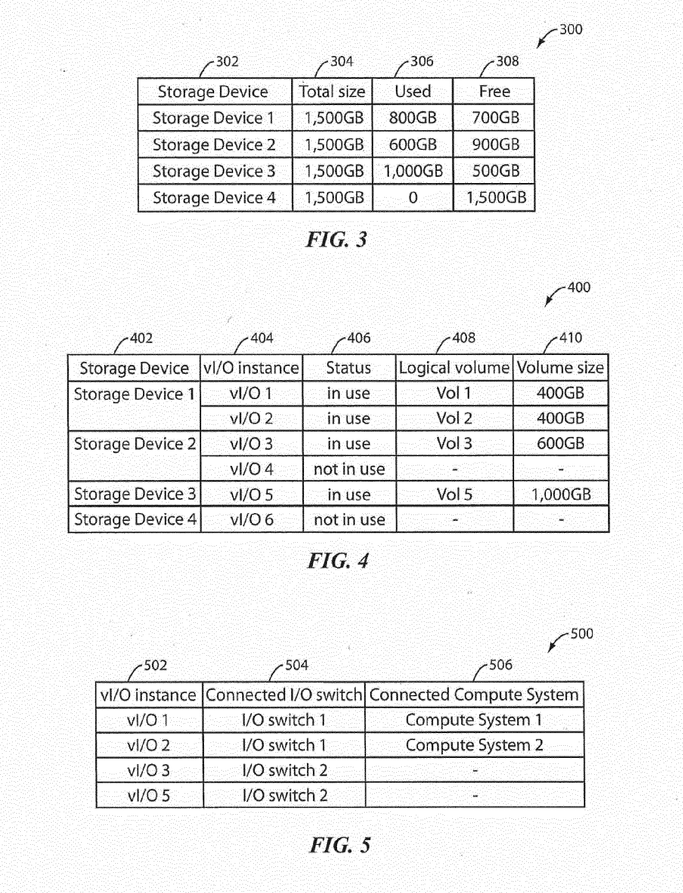

Figures 3 to 7 illustrate information tables that are maintained by the modules in vI/O manager 116 according to an embodiment of the present invention. vI/O manager 116 uses the information tables in figures 3 to 7 to manage vI/O instances and storage volumes in the information system 100. The information is presented in table format to show relationships between information arranged in columns and information arranged in rows. One of skill in the art will appreciate that tables are merely a convenient form of showing the relationships.

Figure 3 illustrates a storage device management table 300 managed by vI/O manager 116 according to an embodiment of the present invention. Storage device management table 300 includes a plurality of columns: a storage device 302 which includes unique identifiers for each storage device 106 in the system, a total size 304 showing a total capacity of a storage device, a used space 306 showing the amount of storage capacity that is used on a storage device, and a free space 308 showing an amount of free space remaining on a storage device.

Figure 4 illustrates a logical volume and virtual I/O mapping table 400 managed by vI/O manager 116 according to an embodiment of the present invention. Logical volume and virtual I/O mapping table 400 includes a plurality of columns: a storage device 402 which includes unique identifiers for each storage device 106 in the system, a virtual I/O instance 404 which includes unique identifiers for the virtual I/O instances created on storage devices 106, a status 406 indicating the usage status of virtual I/O instances, a logical volume 408 which includes unique identifiers for each logical volume associated with a virtual I/O instance, and a volume size 410 indicating the size of the corresponding logical volume.

Figure 5 illustrates a virtual I/O management table 500 managed by vI/O manager 116 according to an embodiment of the present invention. Virtual I/O management table 500 includes a plurality of columns: a virtual I/O instance 502 which includes unique identifiers for virtual I/O instances, a connected I/O switch 504 indicating an I/O switch that a virtual I/O instance is using to connect with computer system 102, and a connected computer system 506 indicating unique identifiers for computer system 102 coupled to a virtual I/O instance via an I/O module 104.

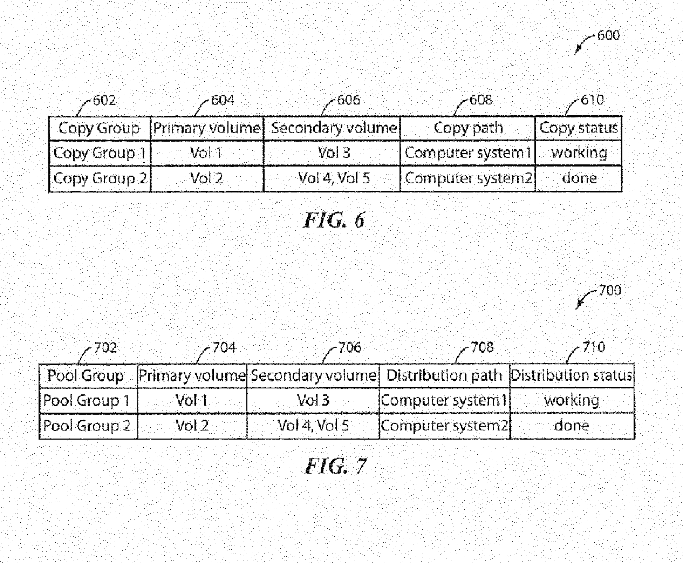

Figure 6 illustrates a copy group management table 600 managed by vI/O manager 116 according to an embodiment of the present invention. Copy group management table 600 includes a plurality of columns. A copy group 602 indicates a unique identifier for copy groups within the system. A primary volume 604 indicates primary volumes (or master volumes) of the copy group. A secondary volume 606 indicates identifiers of secondary volumes (or slave volumes) of the copy group that maintain copies of the primary volumes. A copy path 608 indicates destination of connection which is used for data copy from a primary volume to a secondary volume. One of computer systems 102 or one of vI/O managers 116 may be provided with a data copy function according to implementation. A copy status 610 indicates a copy state from a master volume to slave volumes.

In an embodiment, primary volumes are connected to at least one computer system 102 and may be accessed directly by the computer system, while secondary volumes are backup volumes that are not connected to the computer system and may not be accessed directly by the computer system. As seen in Fig. 6, more than one storage volumes may be paired as secondary volumes for a given primary volume.

Figure 7 illustrates a pool group management table 700 managed by vI/O manager 116 according to an embodiment of the present invention. Copy group management table 700 includes a plurality of columns. A pool group 702 indicates unique identifiers for pool groups. A primary volume 704 indicates unique identifiers for primary volumes associated with particular pool groups. A secondary volume 706 indicates one or more secondary volume associated with a primary volume. A distribution path 708 indicates destination of connection which is used for data distribution from a primary volume to second volumes. One of computer systems 102 or one of vI/O managers 116 may be provided with a data distribution function according to implementation. A distribution status 710 indicates a status of data distribution from a primary volume to one or more secondary volumes. Examples of the distribution status include "working" and "done".

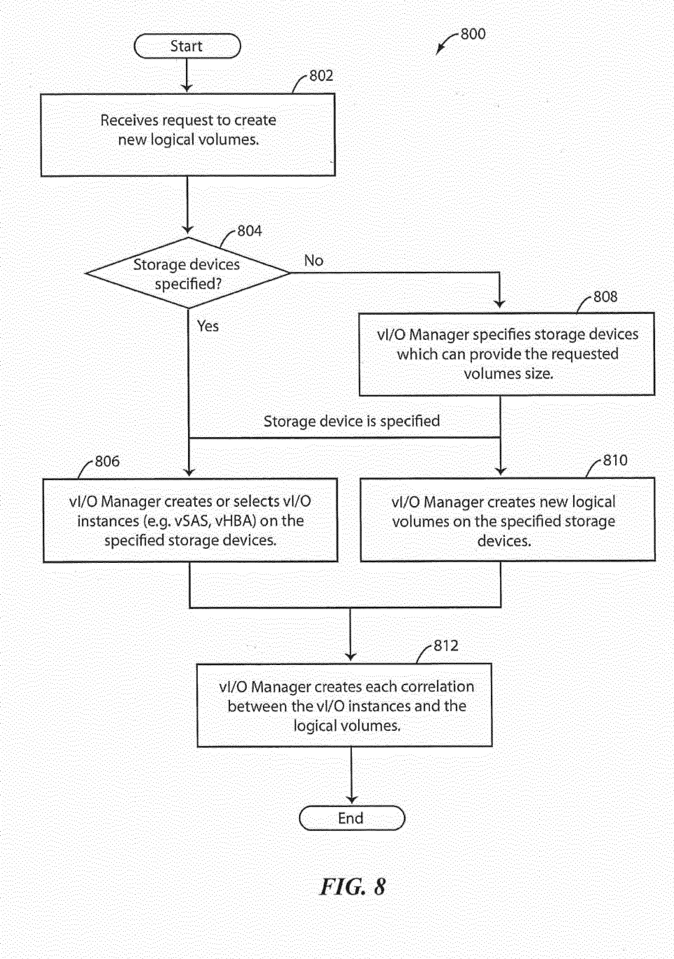

Figure 8 illustrates a process 800 for creating a logical volume on storage device 106 according to an embodiment of the present invention. At step 802, vI/O manager (or I/O manager) 116 receives a request to create one or more new logical volumes (e.g., a volume 130) on storage devices 106 that are attached to I/O modules 104. The request specifies a volume size of the logical volume to be created. In an embodiment, the request includes a unique identifier of a storage device for use in creating the logical volume. In another embodiment, the request includes a category of storage device for use in creating the logical volume. The category of the storage device may be the access speed, endurance, and other characteristics of the storage device. In an embodiment, the request is initiated by a SAN administrator. The request may be initiated by a software module based on the occurrence of a trigger event in other embodiments.

At step 804, the vI/O manager 116 determines whether a storage device has been specified by the request. If a storage device has been specified by the request, then process 800 proceeds to step 806. If not, then process 800 proceeds to step 808.

At step 806, vI/O manager 116 creates a vI/O instance (e.g., vSAS or vHBA) on the storage device specified by the request. If the storage device includes predefined vI/O instances, vI/O manager 116 may select one of these predefined vI/O instances.

Returning to step 804, if the process determines no storage device was specified, the vI/O manager 116 identifies (or specifies) a storage device on which to create the new logical volume (step 808). The vI/O manager 116 may use the data in table 300 shown in Fig. 3 to select a storage device that has sufficient capacity for the new logical volume.

At step 810, vI/O manager 116 creates a new logical volume on the specified storage device 106. The vI/O manager 116 creates a correlation between the new vI/O instance and the new logical volume so that computer system 102 can access the new logical volume (step 812).

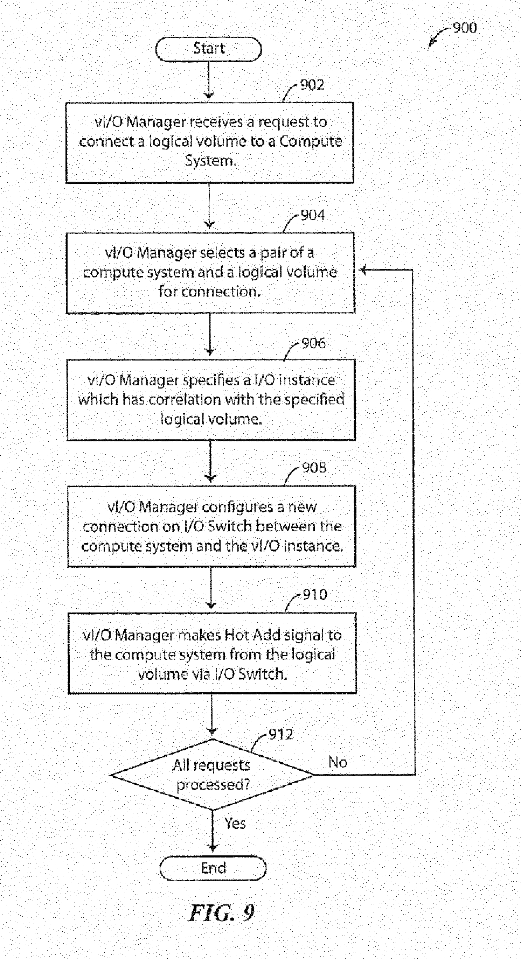

Figure 9 illustrates a process 900 for LUN masking according to an embodiment of the present invention. The LUN masking refers to mapping a logical volume (or its Logical Unit Number) in a storage device to a computer system 102 so that that computer system can access the logical volume. With the LUN masking, the storage volumes 130 in storage device 106 may be deployed as part of storage volumes in a storage system. The storage system typically includes a plurality of disk array systems connected to a plurality of hosts via a storage network.

At step 902, vI/O manager 116 receives one or more requests to connect a logical volume to a computer system 102. In an embodiment, the request is initiated by a SAN administrator. The request may be initiated by a software module based on the occurrence of a trigger event in other embodiments. Each request identifies a computer system 102 and a logical volume 130 to be connected. vI/O manager 116 selects one of the requests to process (step 904). The request identifies a computer system (e.g., computer system 102a) and a logical volume (e.g., logical volume 130a) to be connected.

At step 906, vI/O manager 116 specifies the vI/O instance that has been correlated to the identified logical volume 130a, e.g., by using process 800. vI/O manager 116 configures a new connection on I/O switch 118 between computer system 102a and the vI/O instance (step 908). In an embodiment, the connection made at step 908 is a logical connection between computer system 102a and the vI/O instance.

At step 910, vI/O manager 116 sends a signal to computer system 102a that is to be connected to logical volume 130a. The signal may be a Hot Add notification, or a signal that is configured to make computer system 102a be aware of the new storage volume without requiring a system reboot, such as a PCI interrupt signal. The vI/O manager 116 updates table 500 to reflect the new association between computer system 102a and logical volume 130a.

At step 912, vI/O manager 116 determines whether or not all requests have been processed. If so, process 900 ends. If not, the process returns to step 904.

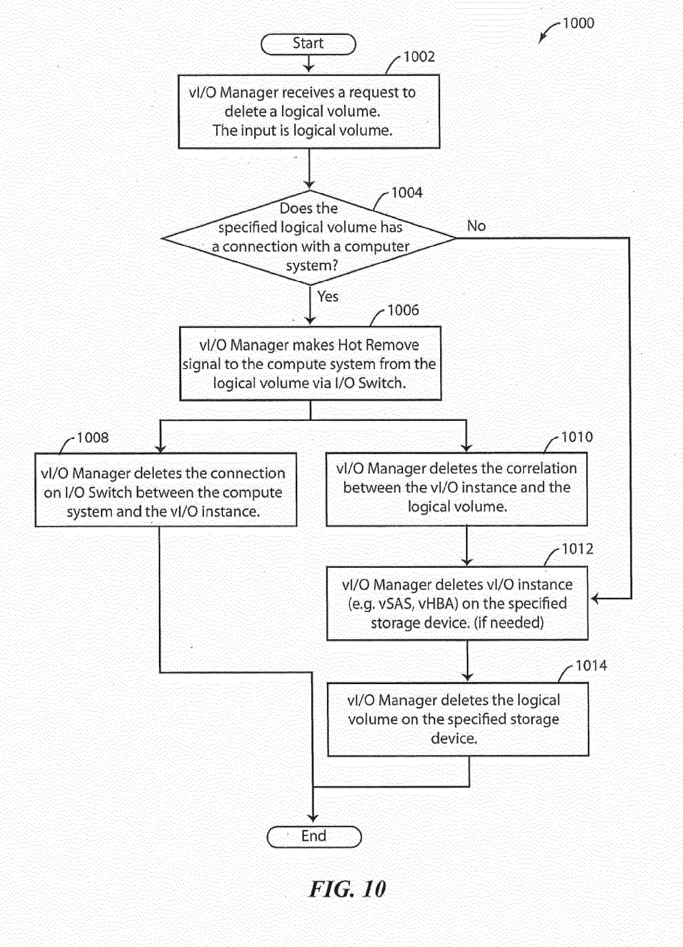

Figure 10 illustrates a process 1000 for deleting a logical volume according to an embodiment of the present invention. In an embodiment, process 1000 is performed by vI/O manager 116 in response to a user input, e.g., from a SAN administrator. In another embodiment, process is performed based on a request initiated by a software module based on the occurrence of a trigger event.

At step 1002, vI/O manager 116 receives a request to delete a logical volume. The request identifies the logical volume to be deleted. vI/O manager 116 determines whether or not the logical volume to be deleted is connected with a computer system 102 (step 1004). If the logical volume is connected with a computer system 102, then the process proceeds to step 1006. If not, the process proceeds to step 1012.

At step 1006, vI/O manager 116 causes a Hot Remove notification to be sent to the computer system 102 that is connected to the logical volume to be deleted. The notification is sent from the logical volume to the computer system 102 via I/O switch 118. In an embodiment, the notification is a PCI interrupt signal.

At step 1008, the vI/O manager 116 deletes the connection between the computer system 102 and the vI/O instance in I/O switch 118, e.g., from table 500. At step 1010, vI/O manager 116 deletes the correlation between the vI/O instance and the logical volume, e.g., in table 400. Steps 1008 and 1010 may be performed together or in any order.

In an embodiment, in step 1012, vI/O manager 116 deletes the vI/O instance that is associated with the logical volume to be deleted from storage device 106. In another embodiment, this step may be skipped if the vI/O instances were preloaded on storage device 106. In such an embodiment, step 1012 may include a step for determining whether or not the vI/O instance is one of the preloaded vI/O instances on storage device 106.

At step 1014, vI/O manager 116 deletes the logical volume on the specified storage device 106. Table 300 may be updated to indicate the availability of the released storage volume resulting from the deletion. Table 400 may also be updated to remove references to the deleted logical volume.

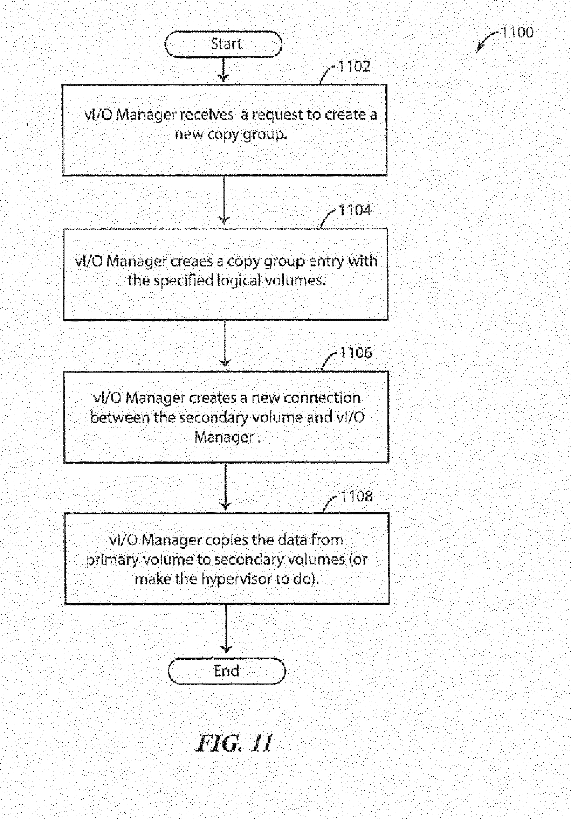

Figure 11 illustrates a process 1100 for adding a copy group according to an embodiment of the present invention. Process 1100 may be performed by vI/O manager 116 in response to a user input, e.g., from a SAN administrator. In another embodiment, process is performed based on a request initiated by a software module based on the occurrence of a trigger event.

At step 1102, vI/O manager 116 receives a request to create a new copy group. The request includes one or more logical volumes to be included within the new copy group, and the designation as to which logical volumes are to be used as primary and secondary volumes. In an embodiment, the request may include characteristics of the logical volume and the storage device, such as an amount of free space, a drive type or speed. In an embodiment, if logical volumes with the desired characteristics do not exist, the information system 100 may create them, for example, by performing process 800 for creating new logical volumes.

At step 1104, I/O manager 116 creates a copy group entry, for example, in copy group table 600. As seen in Fig. 6, the copy group entry may include the logical volumes that are associated with primary and secondary volumes of the copy group. At step 1106, vI/O manager 116 creates a new connection between the secondary volume and the vI/O manager, e.g., via a vI/O instance 1220b. At step 1108, vI/O manager 116 copies data from the primary volume of the copy group to the secondary volumes of the copy group. In an embodiment, step 1108 is conducted by hypervisor on the computer system.

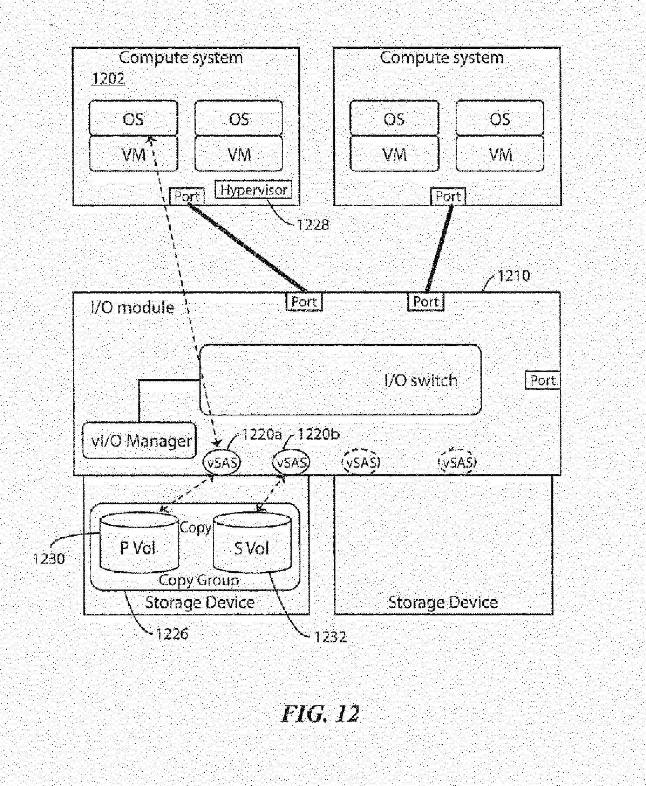

Figure 12 illustrates an information system 1200 including a copy group 1226 according to an embodiment of the present invention. Components of figure 12 are similar to the components of information system 100 illustrated in Fig. 1. As shown in figure 12, a primary volume 1230 of a copy group 1226 is associated with an operating system 1204 through a vI/O instance 1220a, which may be a virtual SAS. A secondary volume 1232 is connected to the vI/O manager via a vI/O instance 1220b. The secondary volume is associated with a primary volume within the copy group. Although the second volume is shown as a single volume, the secondary volume may include a plurality of volumes.

In an embodiment, primary volume 1230 is connected to computer system 1202 via vI/O instance 1220a. Data in primary volume 1230 is copied to secondary volume 1232 by I/O module 1210 or hypervisor 1228. However, secondary volume 1232 is not connected to computer system 1202 so may not be accessed directly by computer system 1202. In another embodiment, hypervisor 1228 may be accessible through an OS 1204 on which a hypervisor is installed.

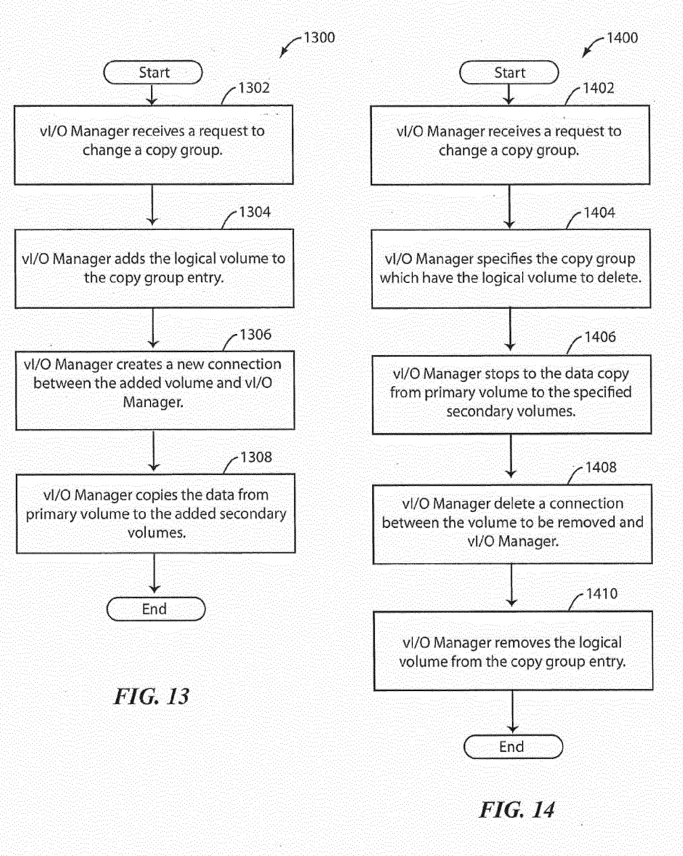

Figure 13 illustrates a process 1300 for adding a logical volume to a copy group 1232 according to an embodiment of the present invention. Process 1300 may be performed based on an input identifying a copy group 1232 and one or more logical volumes to add to the copy group. The logical volume may be specified by a user such as an SAN administrator, or it may be specified by a software module, such as a module within a vI/O manager. In an embodiment, a user may input desired characteristics of the logical volume, and a software module may determine a particular logical volume that has the desired characteristics.

At step 1302, the vI/O manager receives a request to change a copy group. The request identifies a copy group and a logical volume to be added to the copy group. At step 1304, the vI/O manager updates copy group management table 600 to include the logical volume in the designated copy group 1232. In an embodiment, the logical volume added to the copy group 1232 is a secondary volume that cannot be accessed directly by computer system 1202. The vI/O manager creates a new connection between the added logical volume and the vI/O manager (step 1306). The new connection may also be between the added logical volume and a computer system configured to execute a data copy function.

At step 1308, data is copied from the primary volume 1230 to the newly added secondary volume 1232. The copying process may be conducted by the vI/O manager, an OS, or a hypervisor. In an embodiment, the vI/O manager instructs an OS or a hypervisor in computer system 1202 to perform the copying.

Figure 14 illustrates a process 1400 for removing a logical volume 1224 from a copy group 1226 according to an embodiment of the present invention. Process 1400 may be performed based on an input identifying a copy group 1226 and one or more logical volumes to be removed from the copy group. The logical volume may be specified by a user such as an SAN administrator, or it may be specified by a software module, such as a module within the v I/O manager. In an embodiment, the vI/O manager may designate the logical volume to be removed based on a failure detected within the logical volume.

At step 1402, the vI/O manager receives a request to remove a logical volume. In an embodiment, the logical volume to be removed is a secondary volume. The request identifies the logical volume to be deleted. The request may be initiated based on an occurrence of an event, e.g., on a hardware failure. At step 1404, the vI/O manager identifies the copy group 1226 of the logical volume to be deleted. In an embodiment, the vI/O manager identifies the copy group using copy group management table 600.

At step 1406, the vI/O manager stops data copy from a primary volume to the logical volume to be deleted. In an embodiment, the vI/O manager commands hypervisor to stop the data copy.

At step 1408, the vI/O manager deletes a connection between the logical volume to be deleted and the vI/O manager or a computer system that has a data copy function.

At step 1410, the vI/O manager removes the logical volume entry from the copy group management table 600. In an embodiment, removing the logical volume according to process 1400 may performed in conjunction with process 1000 for deleting a logical volume. In another embodiment, process 1400 may be performed in conjunction with process 1300, to replace a logical volume within a copy group.

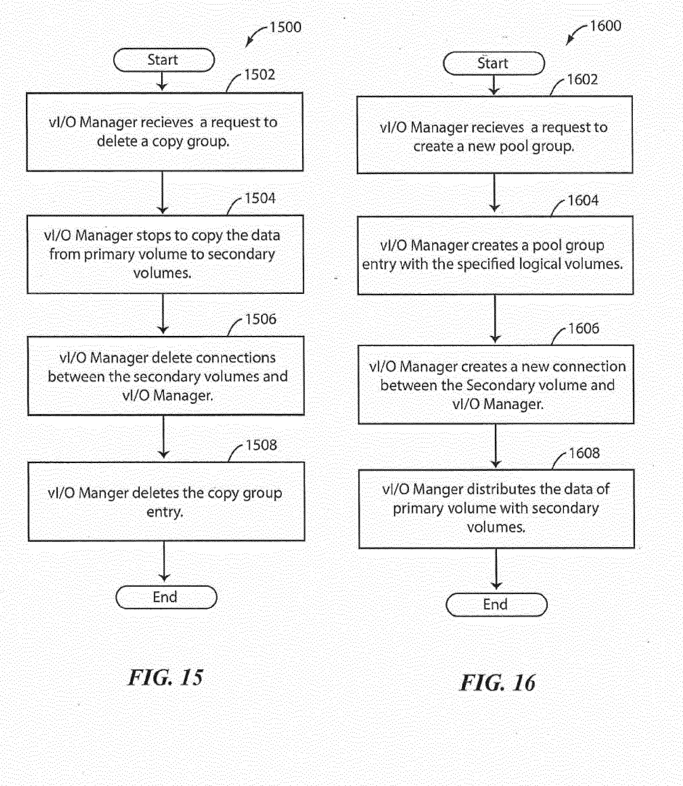

Figure 15 illustrates a process 1500 for deleting a copy group 1226 according to an embodiment of the present invention. In an embodiment, process 1500 is performed by vI/O manager 116 in response to a user input, e.g., from a SAN administrator. In another embodiment, process is performed based on a request initiated by a software module based on the occurrence of a trigger event.

At step 1502, the vI/O manager receives a request to delete a copy group 1226. The request identifies the copy group to be deleted. The vI/O manager stops data copy from a primary volume to the secondary volumes (step 1504). In an embodiment, the vI/O manager commands hypervisor to stop the data copy. At step 1506, the vI/O manager deletes connections between the secondary volumes and the vI/O manager or the computer system that has a data copy function. At step 1508, the vI/O manager removes the entry for the copy group that was deleted from copy group management table 600.

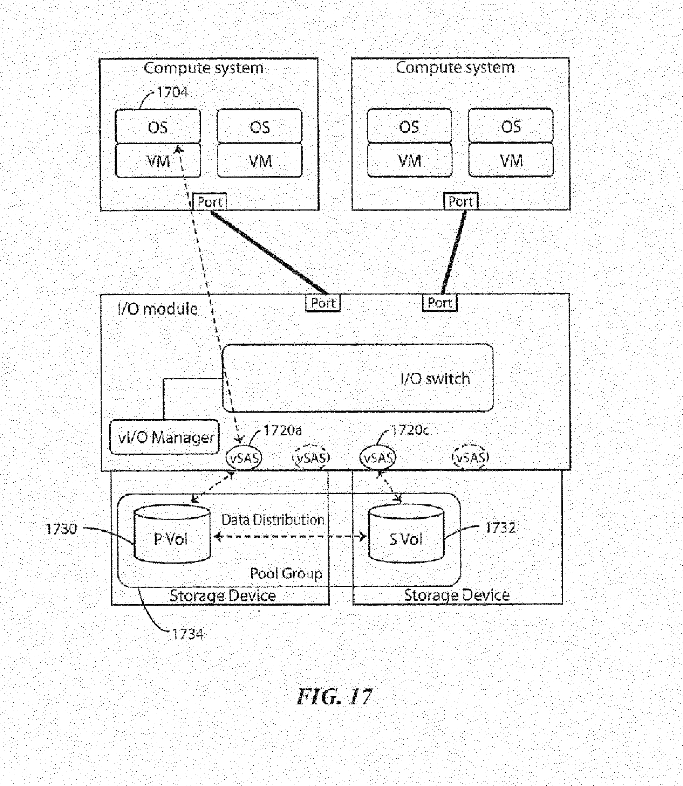

Figure 16 illustrates a process1600 for creating a pool group according to an embodiment of the present invention (see figure 17). In an embodiment, process 1600 is performed by vI/O manager 116 in response to a user input, e.g., from a SAN administrator. In another embodiment, process is performed based on a request initiated by a software module based on the occurrence of a trigger event.

At step 1602, the vI/O manager receives a request to create a pool group 1734. The request identifies a group of logical volumes that includes at least one primary volume 1730 and at least one secondary volume 1732. This group of volumes defines a pool group to be created. At step 1604, the vI/O manager adds a pool group entry in pool group management table 700. The pool group entry corresponds to the pool group associated with the primary volume 1730 and the secondary volume 1732.

At step 1606, the vI/O manager creates a new connection between the secondary volume and the vI/O manager or the computer system which has a data distribution function. The vI/O manager distributes data from the primary volume 1730 to one or more secondary volumes 1732 within the pool group 1734 by data copy (step 1608).

Figure 17 illustrates an information system 1700 including a pool group 1734 according to an embodiment of the present invention. Components of figure 17 are similar to the components of information system 100 illustrated in Fig. 1. As shown in figure 17, a primary volume 1730 of a pool group 1734 is associated with an operating system 1704 through a vI/O 1720a, which may be a virtual SAS. One or more secondary volumes 1732 within the pool group include data copied from the primary volume 1730. In an embodiment, the secondary volumes are in a storage device that is different from the storage device on which the primary volume 1730 is located.

In an embodiment, primary volume 1730 of pool group 1734 is connected to OS 1704 of the computer system 1702, but secondary volume 1732 of the pool group is not connected to the OS. Secondary volume 1732 communicates with the I/O module via a vI/O instance 1720c. The vI/O manager may cause all or part of the data stored on the primary volume to be copied or moved to the secondary volume within the pool group. In other embodiments, a hypervisor may cause the data to be copied or moved from the primary volume to the secondary volume.

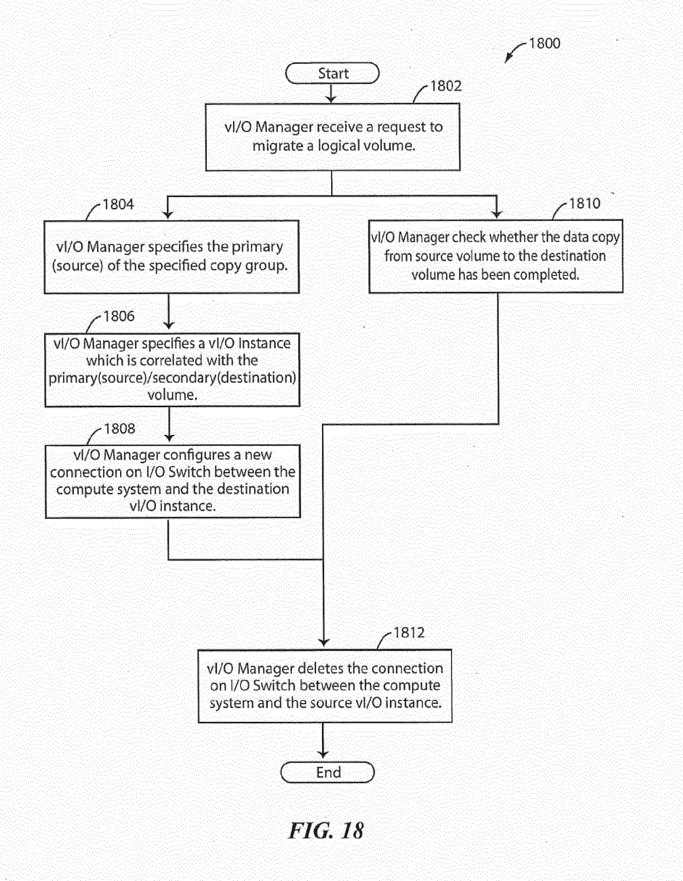

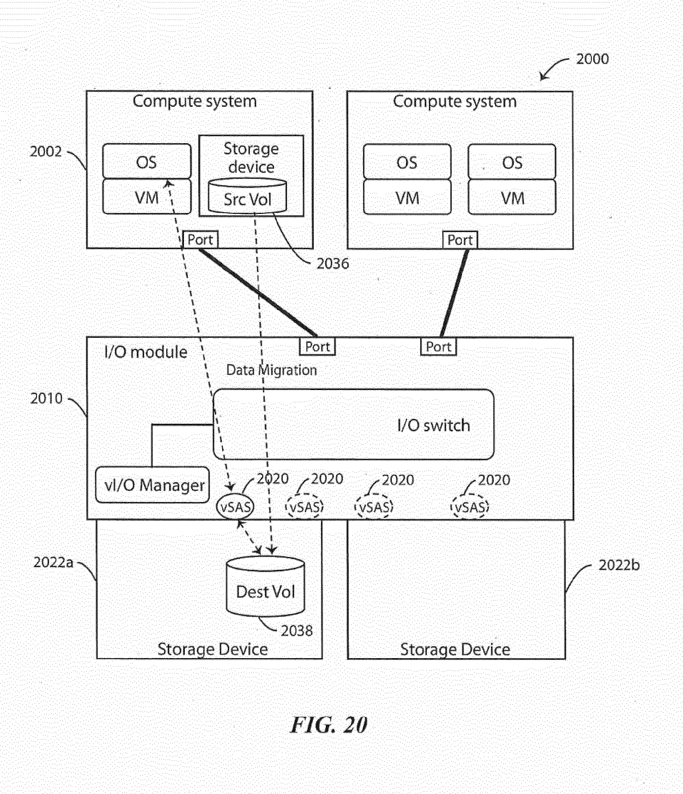

Figure 18 illustrates a process 1800 for migrating a logical volume from a first storage device 2022a coupled to an I/O module 2010 to a second storage device 2022b coupled to the I/O module 2010 according to an embodiment of the present invention (see figure 20). The migration may be between different storage devices connected to the same I/O module, or between storage devices coupled to different I/O modules within the same information system 2000. Process 1800 may be initiated by a user input or the occurrence of a trigger event, e.g., as part of a scheduled maintenance or upon detection of a faulty storage device, or the like.

At step 1802, the vI/O manager receives a request to migrate a logical volume. The request includes a copy group and a secondary volume to which the data are to be migrated (or a destination volume 2038). At step 1804, the vI/O manager determines the source volumes of the copy group from copy group management table 600 and virtual I/O mapping table 400. In an embodiment, if there are no logical volumes available with adequate capacity to accept the data from the source copy group, the vI/O manager may create a destination volume, for example by performing process 800 for creating a logical volume.

At step 1810, vI/O manager checks the copy status to determine whether or not the data copy from the source volume to the destination volume is completed.

At step 1806, the vI/O manager identifies the vI/O instances 2020 associated with the primary volume and the secondary volumes of the copy group.

At step 1808, the vI/O manager configures I/O switch 2016 to establish a new connection between the computer system 2002 associated with the copy group and the vI/O 2020 associated with the destination volume 2038. At step 1812, the vI/O manager removes the connection between the computer system and the vI/O of the source volume on the I/O switch. In an embodiment, the source volume (i.e., the prior source volume) may be used as a secondary volume for the new copy group.

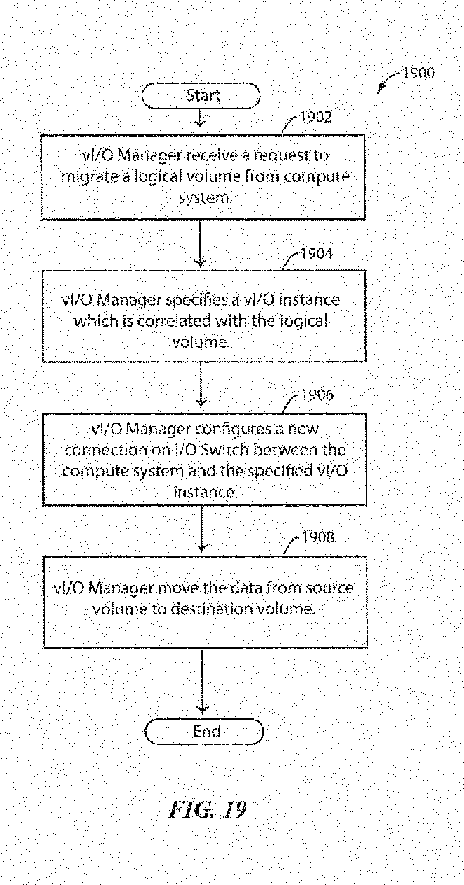

Figure 19 illustrates a process 1900 for migrating data from a source volume 2036 within a computer system 2002 to a destination volume 2038 in a storage device 2022 according to an embodiment of the present invention. In an embodiment, process 1900 is performed by vI/O manager 116 in response to a user input, e.g., from a SAN administrator. In another embodiment, process is performed based on a request initiated by a software module based on the occurrence of a trigger event.

At step 1902, the vI/O manager receives a request to migrate a logical volume (or source volume) from a computer system to the destination volume, which may be a logical volume or storage device that is not connected to the computer system. In an embodiment, the request includes a computer system and a logical volume that is not connected to the computer system. If a suitable volume does not exist, then the vI/O manager may create one using process 800.

At step 1904, the vI/O manager identifies a vI/O instance 2020 associated with the destination volume identified in step 1902, e.g., by accessing virtual I/O mapping table 400. At step 1906, the vI/O manager establishes a connection on I/O switch 2016 between the computer system 2002 and the vI/O instance 2020 identified in step 1904.

At step 1908, the vI/O manager moves the data from the source volume 2036 to the destination volume 2038 using the connection established in step 1906. The copying may be performed by the vI/O manager, an OS 2004, or a hypervisor 2028.

Figure 20 illustrates a configuration of an information system 2000 during a volume migration according to an embodiment of the present invention. System 2000 includes a plurality of computer system 2002, at least one I/O module 2010, and a plurality of storage devices 2022. Data from the computer system may be migrated dynamically with volume virtualization features of server virtualization technologies.

The preceding has been a description of the preferred embodiment of the invention. It will be appreciated that deviations and modifications can be made without departing from the scope of the invention, which is defined by the appended claims.

## Claims

1. An input/output (I/O) device comprising:
at least one communication port;
at least one storage device attached to the I/O device and is configured to provide a storage volume; and
an I/O manager configured to manage operations of the I/O device,
wherein the I/O manager is configured to:
receive a request to create a new logical volume,
create a new logical volume on the storage device based on the request, and
define a first relationship between the created logical volume and a virtual I/O instance based on the request, the virtual I/O instance being a virtual access point for enabling a computer system connected to the I/O device via the communication port to access the created logical volume.

2. The I/O device of claim 1, wherein the virtual I/O instance is created on the storage device by the I/O manager based on the request.

3. The I/O device of claim 1, wherein the virtual I/O instance is one selected by the I/O manager based on the request from a plurality of virtual I/O instances that have been predefined on the storage device.

4. The I/O device of claim 1, wherein a number of virtual I/O instances is equal to a number of logical volumes managed by the I/O manager.

5. The I/O device of claim 1, wherein the I/O manager manages a plurality of virtual I/O instances and a plurality of logical volumes, each logical volume being uniquely assigned to a single virtual I/O instance.

6. The I/O device of claim 1, wherein the I/O device is a PCI-based I/O device and the virtual I/O instance is a virtual SAS instance, a virtual HBA instance, or a virtual NIC instance.

7. The I/O device of claim 1, wherein the I/O manager is configured to create a second relationship between the virtual I/O instance and the computer system, thereby associating the logical volume with the computer system to enable the computer system to access the logical volume.

8. The I/O device of claim 7, wherein the second and third relationships define a Logical Unit Number (LUN) masking process.

9. The I/O device of claim 1, wherein the I/O device is one of a plurality of I/O devices deployed in an information system, and
wherein one of the I/O manager is a master I/O manager that is configured to centrally manage operations of the plurality of I/O devices.

10. The I/O device of claim 9, wherein the I/O manager is a software module embodied on a non-transient computer readable medium.

11. An input/output (I/O) manager stored in an I/O device having at least one communication port and at least one storage device, wherein the I/O manager is configured to:
receive a request to create a new logical volume,
create a new logical volume on the storage device based on the request, and
define a first relationship between the created logical volume and a virtual I/O instance based on the request, the virtual I/O instance being a virtual access point for enabling a computer system connected to the I/O device via the communication port to access the created logical volume.

12. The I/O manager of claim 11, wherein the virtual I/O instance is created on the storage device by the I/O manager based on the request or one selected by the I/O manager based on the request from a plurality of virtual I/O instances that have been predefined on the storage device.

13. The I/O manager of claim 11, wherein the I/O manager manages a plurality of virtual I/O instances and a plurality of logical volumes, each logical volume being uniquely assigned to a single virtual I/O instance.

14. The I/O manager of claim 11, wherein the I/O device is a PCI-based I/O device and the virtual I/O instance is a virtual SAS instance, a virtual HBA instance, or a virtual NIC instance, and
wherein the I/O manager is a software module embodied on a non-transient computer readable medium.

15. The I/O manager of claim 11, wherein the I/O manager is configured to create a second relationship between the virtual I/O instance and the computer system, thereby associating the logical volume with the computer system to enable the computer system to access the logical volume.

16. The I/O manager of claim 15, wherein the second and third relationships define a Logical Unit Number (LUN) masking process.

17. The I/O manager of claim 11, wherein the I/O device is one of a plurality of I/O devices deployed in an information system, and
wherein one of the I/O manager is a master I/O manager that is configured to centrally manage operations of the plurality of I/O devices.

18. A method for managing an input/output device having a communication port and at least one storage device, the method comprising:
receiving a request to create a new logical volume;
creating a new logical volume on the storage device based on the request; and
defining a first relationship between the created logical volume and a virtual I/O instance based on the request, the virtual I/O instance being a virtual access point for enabling a computer system connected to the I/O device via the communication port to access the created logical volume.

19. The method of claim 18, further comprising:
creating a second relationship between the virtual I/O instance and the computer system, thereby associating the logical volume with the computer system to enable the computer system to access the logical volume.

20. The method of claim 19, further comprising:
creating the virtual I/O instance on the storage device based on the request,
wherein the I/O device manages a plurality of virtual I/O instances and a plurality of logical volumes, each logical volume being uniquely assigned to a single virtual I/O instance, and
wherein the I/O device is a PCI-based I/O device and the virtual I/O instance is a virtual SAS instance, a virtual HBA instance, or a virtual NIC instance.
